# DEMANDE DE BREVET EUROPEEN

(11) **EP 1 806 953 A1**
(43) Date de publication de la demande: **11.07.2007**
(21) Numéro de dépôt: 07300702.3
(22) Date de dépôt: 04.01.2007
(51) Int. Cl.: H05B 3/34, B29C 65/34

(54) **Elément rigide en un matériau à base d'une résine polymère, destiné à être solidarisé sur une structure de support en un matériau polymérique**

(30) Priorité: 04.01.2006 FR 0650028
(71) Demandeur: CHOMARAT COMPOSITES, 75002 Paris (FR)
(72) Inventeur: Maupetit, Jérôme, Saint Martin de Valamas 07310 (FR)
(74) Mandataire: Palix, Stéphane

(57) **Abrégé**

Elément rigide (2) en un matériau à base d'une résine polymère, destiné à être solidarisé par soudure à une structure de support (3) en un matériau polymérique, ***caractérisé*** en ce qu'il comporte une couche textile (10) intégrant des fils conducteurs électriques (11,12), et en ce qu'il présente une couche extérieure (14) en un matériau compatible avec le matériau de la structure de support (3).

## Description

### Domaine Technique

L'invention concerne le domaine des textiles techniques, et plus spécifiquement des complexes textiles utilisés dans la réalisation de pièces composites.

Elle concerne plus particulièrement un élément rigide apte à être soudé sur une structure de support. Elle vise plus particulièrement l'intégration dans cet élément d'organes qui lui permet d'assurer le phénomène de soudure par un ramollissement *in situ* des différents matériaux à l'interface de la zone de solidarisation.

### Techniques antérieures

De façon générale, il peut être utile, pour améliorer les propriétés mécaniques d'une structure, de lui adjoindre des éléments complémentaires jouant un rôle de raidisseurs, et venant modifier la capacité de déformation de la structure principale.

A titre d'exemple, on peut mentionner la fabrication de skis sur lesquels peuvent être mis en place des raidisseurs constitués d'éléments relativement rigides limitant la déformation en flexion du ski. Un autre exemple peut concerner le renforcement des structures de carrosserie en matériau composite, ou encore les coques de bateaux, voire encore le renforcement de structures dans des applications off-shore, et notamment les canalisations ou tuyaux.

L'intégration de ces éléments raidisseurs directement dans la structure principale, peut donner lieu à des complexifications trop importantes du procédé, voire même à des impossibilités dans certains cas de figure. En effet, l'intégration de nervures, directement lors de la fabrication des pièces composites, peut exagérément compliquer la forme du moule, ou imposer le positionnement des raidisseurs dans des zones qui ne sont pas forcément optimales.

Une autre technique pour la mise en place de ce type de raidisseurs consiste à opérer par collage. Ainsi, des colles du type isocyanate peuvent être utilisées, de manière à réagir avec les résines qui composent les couches extérieures de l'élément raidisseur et de la structure de support. Toutefois, l'emploi de ce type de colle présente certains inconvénients. En effet, les composés isocyanates réagissent chimiquement avec les résines de ces couches, et elles doivent donc être formulées pour éviter l'apparition de réactions parasites qui viendraient dégrader le reste de la structure ou du raidisseur. En outre et surtout, le collage nécessite une opération de dépôt de la colle qui est délicate dans la mesure où elle nécessite une précision de positionnement, et le travail dans une atmosphère exempte de poussière.

On a également proposé dans les documents FR 2 620 648 et WO 2004/003096 d'utiliser de films de collages interposés entre les pièces à assembler, ces colles étant réactivées par exposition à une source de chaleur constituée par un organe résistif électrique intégré ou associé au film de collage. La circulation d'un courant électrique provoque dans cet organe résistif en provoque l'échauffement qui se transmet aux films de colle ainsi réactivée. Des problèmes évidents de mise en place et de positionnement rendent ces procédés difficilement exploitables de façon industrielle.

Un objectif de l'invention est de fournir une solution pour solidariser un élément sur un support à base d'un matériau polymérique, qui permette un positionnement simple, sans imposer de conditions opératoires difficiles à mettre en oeuvre de façon industrielle.

Un autre objectif de l'invention est de permettre la solidarisation d'éléments additionnels qui puissent être de formes extrêmement variées, et ce avec une homogénéité des propriétés de d'accrochage sur toute la surface de contact entre les deux pièces.

### Exposé de l'invention

L'invention concerne donc un élément rigide réalisé en un matériau à base d'une résine polymère et destiné à être solidarisé à une structure de support en un matériau également polymérique.

Conformément à l'invention, cet élément se caractérise en ce qu'il comporte une couche textile intégrant des fils conducteurs électriques. Cette couche textile est recouverte par une couche extérieure, réalisée en un matériau qui est compatible avec le matériau de la structure de support.

Autrement dit, l'invention consiste donc à utiliser un élément qui intègre un complexe textile dont l'âme est conductrice électriquement, de manière à pouvoir être parcourue par un courant lorsque l'élément est mis en place sur le support. Le passage d'un courant électrique dans l'âme textile provoque par effet Joule la dissipation d'une chaleur, qui vient ramollir les matériaux à proximité, et notamment la couche extérieure de l'élément rigide, mais également dans une moindre mesure, les couches extérieures de la structure de support. De la sorte, les différentes matières, sous l'effet d'une pression, peuvent se mixer, dans un état proche de la fusion, pour ensuite former une seule couche homogène après refroidissement, réalisant ainsi une sorte de soudure.

De la sorte, l'accrochage est réalisé de manière très homogène, puisque l'intégralité de l'âme textile dissipe une quantité de chaleur. Du fait de la compatibilité chimique de la couche qui recouvre le textile et qui vient au contact de la couche supérieur de la structure support, il n'y a donc pas de risque de voir apparaître des phénomènes chimiques susceptibles de dégrader ces différentes couches, voire de créer des zones de fragilité ou de délaminage. L'âme textile est imprégnée par la résine de la couche externe, ce qui permet également d'éliminer, ou à tout le moins de fortement limiter les risques de délaminage, que l'on observe avec les ensembles collés. En d'autres termes, l'homogénéité des matériaux utilisés et la définition de la surface de contact permet d'obtenir une soudure reproductible et fiable.

En pratique, l'âme textile peut être réalisée de différentes manières, et notamment à base d'un tissu chaîne et trame, ou d'un non tissé.

Dans le cas d'un tissu chaîne et trame, les fils conducteurs peuvent être présents soit dans une seule direction du tissu, et typiquement le sens chaîne. Les fils conducteurs peuvent également être présents dans les deux directions du tissu, de manière à former un réseau maillé.

En fonction des applications, et notamment des dimensions des zones de soudure, les fils conducteurs peuvent représenter tout ou partie des fils dans le sens chaîne et/ou trame. En d'autres termes, dans certains cas, l'intégralité des fils dans le sens chaîne et/ou le sens trame, est constituée par des fils conducteurs. Dans d'autres cas, les fils conducteurs sont répartis entre d'autres fils non conducteurs.

Avantageusement, en pratique, les fils conducteurs utilisés peuvent être à base de filaments de carbone, qui présentent une bonne capacité au tissage, tout en possédant une résistivité électrique permettant d'obtenir une élévation de température suffisante.

Cette âme textile est recouverte d'une couche extérieure qui peut être obtenue de différentes manières. Ainsi, la couche extérieure peut être réalisée par une opération préalable d'enduction de l'âme textile, qui est ensuite intégrée au reste de l'élément. Dans ce cas, l'étape d'enduction permet au matériau de la couche extérieure d'imprégner et pénétrer l'âme textile.

La couche extérieure associée à l'âme textile peut être obtenue par contre-collage d'un ou plusieurs films sur l'âme textile, ou encore d'un tissu constitué de fils thermoplastiques. Il est également possible de déposer la couche extérieure par poudrage, ou encore d'enduire les fils conducteurs individuellement avant de les tisser, et d'intégrer le tissu dans l'élément caractéristique.

### Description sommaire des dessins

La manière de réaliser l'invention, ainsi que les avantages qui en découlent, ressortiront bien de la description du mode de réalisation qui suit, à l'appui des figures annexées dans lesquelles :
- la figure 1 est une vue en perspective sommaire d'un élément rigide conforme à l'invention, montré au moment de sa mise en place sur la structure de support ;
- les figures 2 et 3 sont des vues en coupe du complexe caractéristique montré entre la structure de support et l'élément raidisseur, respectivement avant et après l'opération de soudure.

### Manière de réaliser l'invention

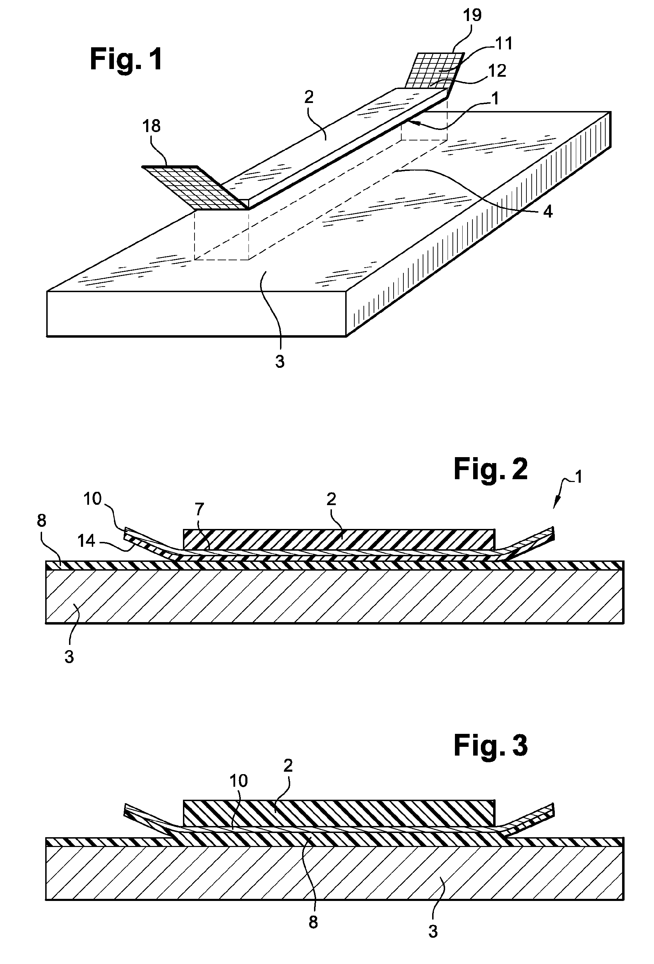

La figure 1 illustre une situation dans laquelle l'élément rigide (2) caractéristique (1) est présenté avant d'être soudé sur une structure de support (3), au niveau d'une zone spécifique (4), délimitée par des traits pointillés.

La structure de support (3) peut être une pièce réalisée par injection, moulage, ou toute autre technique dans laquelle une résine en un matériau polymérique est employée pour former au moins la couche supérieure (8), visible à la figure 2.

L'élément raidisseur (2) est généralement réalisé à base d'un matériau plus rigide. Il est solidarisé fermement à la structure de support (3) pour influencer la rigidité globale de cette dernière. Il peut typiquement s'agir d'éléments composites, intégrant des structures de renfort textiles, voire métalliques, noyées dans une résine thermoplastique.

L'élément (2) intègre un complexe à base textile (1) destiné à assurer la soudure sur la structure (3). Ce complexe (1) comporte une âme textile (10) qui est réalisée à base de fils possédant une conductivité électrique. Parmi les matériaux donnant de bons résultats figurent les tissus à base de fils de carbone. Ces fils de carbone peuvent être présents en chaîne (11) et/ou en trame (12) du tissu. Ils peuvent être utilisés seuls ou en combinaison avec d'autres fils non conducteurs, dans le but de réduire le nombre de fils de carbone, et donc d'abaisser le coût de cet intermédiaire de collage.

Typiquement, on a obtenu de bons résultats en utilisant des textiles tissés à base, en chaîne et trame, de fils de carbone de 12 000 filaments tissés de manière jointive au moyen d'une trame incluant certains fils enduits thermofusibles pour fixer le tissu. Un tel textile présente une résistance de l'ordre de quelques dizaines d'Ohms entre deux points éloignés de 15 cm environ.

Toutefois, d'autres filaments conducteurs, notamment métalliques, peuvent être utilisés. De même, une étoffe non tissée réalisée à base de filaments conducteurs en quantité suffisante peut être employée.

Conformément à l'invention, cette âme textile (10) est recouverte, sur sa face destinée à venir au contact du support (3), d'une couche (14) en matériau polymérique. Ce matériau est compatible avec la résine de la pièce au contact de laquelle elle est destinée à venir. Par "compatibilité", on doit entendre la capacité de deux matériaux à adhérer l'un à l'autre après avoir été mis en contact, et partiellement fondus ou ramollis par exposition à la chaleur. Ainsi, les matériaux polymères sont bien entendu compatibles avec eux-mêmes. Mais des couples de matériaux polymères distinct sont connus pour présenter une bonne adhérence l'un sur l'autre. A titre d'exemple de matériaux compatibles différents, on peut citer l'association d'acétate-éthyl-vynil (EVA) avec le polyéthylène ou le polypropylène, ou bien encore l'association de polyamide 6-6 avec le polyuréthanne thermoplastique élastomère (TPE-U).

Ainsi, dans le cas d'une structure (3) à base de polyamide ou polyuréthanne thermoplastique, il peut être avantageux que l'âme textile (10) soit également recouverte d'une couche (14) de polyamide ou de polyuréthanne thermoplastique. De multiples combinaisons de matériaux peuvent être possibles en fonction de la composition des éléments à solidariser.

Comme déjà évoqué, la couche externe (14) de l'élément peut être obtenue soit par enduction soit par contre-collage des films, ou de tissus constitués de fils thermoplastiques. Il est également possible de déposer cette couche externe (14) soit par poudrage, soit par enduction des fils conducteurs individuellement. Il est également possible dans une opération préalable, d'associer un élément raidisseur à proprement parler avec un complexe textile intégrant la couche textile conductrice et une ou plusieurs couches de matériaux polymériques sur l'une et/ou l'autre de ses faces. Ces couches sont choisies pour être compatibles avec la surface au contact de laquelle elles vont venir, à savoir celle du support (3) et celle du reste de l'élément raidisseur sur lequel le complexe sera plaqué. Il est également possible de réaliser l'élément raidisseur caractéristique directement par moulage, en intégrant le textile dans le moule de thermocompression.

Lors de la mise en place de l'élément (2), tel qu'illustré à la figure 1, la couche externe inférieure (14) vient au contact de la face supérieure (8) de la structure de support (3). Les portions débordantes (18,19) du complexe servent d'électrodes, et peuvent recevoir la connexion à une source de tension ou un générateur de courant. Le courant électrique traversant l'âme textile (10) provoque un échauffement par effet Joule. Cet échauffement provoque le ramollissement, voire la fusion partielle de la couche externe (14) de l'élément rigide (1) et de la face correspondante (8) de la structure de support, de telle sorte qu'après refroidissement, l'interface entre les couches a quasiment disparu, comme illustré à la figure 3. La durée de conduction électrique est déterminée en fonction des températures à atteindre, elles-mêmes dépendantes des épaisseurs et des matériaux employés.

Typiquement, avec un textile tissé à base de fils de carbone de 12 000 filaments, revêtu d'un polyamide, une conduction de quelques secondes sous une pression de quelques bars permet d'assurer une montée en température jusqu'à une température de l'ordre de 160°C, suffisante pour assurer l'homogénéisation du polyamide avec le matériau de l'élément raidisseur.

Il ressort de ce qui précède que le complexe conforme à l'invention permet d'assurer une solidarisation efficace et homogène, avec un temps de cycle court sans nécessiter d'opération de manipulation délicate.

## Revendications

1. Elément rigide (2) en un matériau à base d'une résine polymère, destiné à être solidarisé sur une structure de support (3) en un matériau polymérique, ***caractérisé* en ce qu'**il comporte une couche textile (10) intégrant des fils conducteurs électriques (11,12), et **en ce qu'**il présente une couche extérieure (14) en un matériau compatible avec le matériau de la structure de support (3).

2. Elément selon la revendication 1, ***caractérisé* en ce que** la couche textile (10) est réalisée à partir d'un tissu chaîne et trame.

3. Elément selon la revendication 2, ***caractérisé* en ce que** le tissu possède des fils conducteurs, au moins dans le sens chaîne.

4. Elément selon la revendication 1, ***caractérisé* en ce que** la couche textile est réalisée à partir d'un non tissé.

5. Elément selon la revendication 1, ***caractérisé* en ce que** les fils conducteurs sont à base de filaments de carbone.

6. Elément selon la revendication 4, ***caractérisé* en ce que** la couche extérieure (14) est obtenue par enduction ou poudrage de la couche textile.

7. Elément selon la revendication 5, ***caractérisé* en ce que** la couche extérieure est obtenue par contrecollage d'un ou plusieurs films.

8. Elément selon la revendication 5, ***caractérisé* en ce que** la couche extérieure est obtenue par contrecollage d'un ou plusieurs tissus de fils thermoplastique.
